# DEMANDE DE BREVET EUROPEEN

(11) **EP 1 489 326 A2**
(43) Date de publication de la demande: **22.12.2004**
(21) Numéro de dépôt: 04291391.3
(22) Date de dépôt: 04.06.2004
(51) Int. Cl.: F16D 23/14

(54) **Butée de débrayage comportant des moyens de solidarisation avec l'organe de commande**

(30) Priorité: 16.06.2003 FR 0307228
(71) Demandeur: Aktiebolaget SKF, S-415 50 Göteborg (SE)
(72) Inventeur: Arnault, Benoit, 37540 Saint Cyr sur Loire (FR); Ploessl, Dieter, 97493 Bergrheinfeld (DE); Girardin, Hervé, 37390 Charentilly (FR)
(74) Mandataire: Zapalowicz, Francis

(57) **Abrégé**

Butée de débrayage comprenant un palier à roulement (1) monté sur un élément de manoeuvre (2) muni d'une partie tubulaire (3) et d'une collerette radiale (4), sur laquelle vient prendre appui un organe de commande (18) de la butée et des moyens d'encliquetage pour solidariser axialement l'organe de commande et l'élément de manoeuvre, les moyens d'encliquetage comprenant au moins deux éléments de retenue (24) métalliques indépendants, capables d'être insérés et maintenus dans un logement prévu dans l'élément de manoeuvre (2), chaque élément de retenue (24) comprenant un talon radial (25) disposé axialement entre la collerette radiale de l'élément de manoeuvre et la bague non tournante (5) du roulement de butée, et une languette axiale (26) de retenue venant se raccorder directement sur le talon et comportant à son extrémité libre des moyens de retenue avec l'organe de commande, ladite languette (26) traversant une ouverture pratiquée dans la collerette radiale de l'élément de manoeuvre.

## Description

La présente invention relève du domaine des butées de débrayage.

Une butée de débrayage peut comprendre un élément d'attaque pourvu d'un palier à roulement monté sur un élément de manoeuvre, tel qu'une douille de guidage munie d'une partie tubulaire et d'une collerette radiale sur laquelle vient prendre appui un organe de commande de la butée, tel qu'une fourchette de commande et des moyens d'encliquetage pour solidariser axialement l'organe de commande et l'élément de manoeuvre.

On connaît, par le document EP-A-0 462 870, une butée de ce type dans laquelle les moyens d'encliquetage comportent deux éléments de retenue métalliques indépendants capables d' être insérés et maintenus par encliquetage dans un logement prévu dans la douille. Chaque élément de retenue présente un crochet venant coopérer avec l'organe de commande. Les éléments de retenue se présentent sous la forme de pièces métalliques cruciformes solidarisées par une grande partie de leur longueur à la douille de guidage et comportant une languette radialement flexible munie à son extrémité libre d'un crochet permettant la solidarisation axiale de la butée et de la fourchette.

Si une telle butée donne globalement satisfaction, certains inconvénients peuvent apparaître.

Lorsque la géométrie des doigts de la fourchette de commande impose une faible longueur de la branche axiale de l'élément de retenue supportant le crochet, l'effort axial nécessaire pour faire fléchir radialement le crochet lors de l'opération d'encliquetage est relativement important, ce qui rend cette opération plus difficile.

Par ailleurs, la faible longueur du crochet radialement flexible e implique, pour une flèche radiale donnée en extrémité de crochet, des concentrations de contrainte relativement importantes.

Si, lors de l'opération d'assemblage de la fourchette et de la butée, la fourchette et la butée présentent des défauts d'alignement et de positionnement importants, les contraintes imposées par les doigts de fourchette au crochet de l'élément de retenue peuvent provoquer un endommagement desdits éléments de retenue nuisible au maintien ultérieur de la solidarisation axiale.

La présente invention se propose de remédier aux inconvénients évoqués ci-dessus.

La présente invention propose une butée dont les éléments de retenue sont fermement solidarisés à l'élément de manoeuvre.

L'invention propose une butée dont l'élément de retenue présente un crochet relativement souple radialement.

La butée de débrayage selon un aspect de l'invention, comprend un palier à roulement monté sur un élément de manoeuvre muni d'une partie tubulaire et d'une collerette radiale, sur laquelle vient prendre appui un organe de commande de la butée et des moyens d'encliquetage pour solidariser axialement l'organe de commande et l'élément de manoeuvre. Les moyens d'encliquetage comprennent au moins deux éléments de retenue métalliques indépendants, capables d'être insérés et maintenus dans un logement prévu dans l'élément de manoeuvre. Chaque élément de retenue comprend un talon radial disposé axialement entre la collerette radiale de l'élément de manoeuvre et la bague non tournante du roulement de butée, et une languette axiale de retenue venant se raccorder directement sur le talon et comportant à son extrémité libre des moyens de retenue avec l'organe de commande, ladite languette traversant une ouverture pratiquée dans la collerette radiale de l'élément de manoeuvre.

Avantageusement, l'élément de retenue comprend au moins une languette axiale auxiliaire. La languette auxiliaire peut être indépendante de la languette axiale.

Dans un mode de réalisation de l'invention, la languette auxiliaire comprend des moyens de retenue sur l'élément de manoeuvre.

Dans un mode de réalisation de l'invention, la languette auxiliaire se raccorde au talon tout en étant indépendante de la languette axiale.

L'indépendance s'entend comme la liberté pour la languette auxiliaire de fléchir radialement sans interaction notable sur la languette axiale de retenue.

Dans un mode de réalisation de l'invention, la languette auxiliaire est disposée parallèlement à la languette axiale et séparée de celle-ci par une découpe.

Dans un mode de réalisation de l'invention, la languette auxiliaire comprend une portion proche du talon, de faible largeur, et une portion distante du talon, de grande largeur, apte à coopérer avec une surface de l'élément de manoeuvre pour la retenue axiale de l'élément de retenue sur l'élément de manoeuvre.

Dans un mode de réalisation de l'invention, la portion de grande largeur est encliquetée sur l'élément de manoeuvre.

Dans un mode de réalisation de l'invention, la languette auxiliaire comprend un bossage de retenue sur l'élément de manoeuvre.

Dans un mode de réalisation de l'invention, ledit bossage est distant du talon.

Dans un mode de réalisation de l'invention, l'élément de manoeuvre comprend une glissière de guidage de l'élément de retenue. Une partie d'une languette auxiliaire peut être disposée dans la glissière.

Dans un mode de réalisation de l'invention, le talon de l'élément de retenue est logé dans un dégagement de la collerette radiale de l'élément de manoeuvre.

Dans un mode de réalisation de l'invention, les moyens de retenue de la languette auxiliaire comprennent un crochet.

Dans un mode de réalisation de l'invention, il est prévu deux languettes auxiliaires disposées latéralement de chaque côté de la languette axiale de retenue de l'organe de commande.

Grâce à l'invention, on dispose d'une butée de débrayage particulièrement robuste et fiable. La séparation des languettes principale et auxiliaire permet un déplacement élastique important de la languette principale.

La présente invention sera mieux comprise à l'étude de la description détaillée de quelques modes de réalisation pris à titre d'exemples nullement limitatifs et illustrés par les dessins annexés, sur lesquels :
- la figure 1 est une vue en coupe axiale d'une butée de débrayage selon un premier mode de réalisation de l'invention;

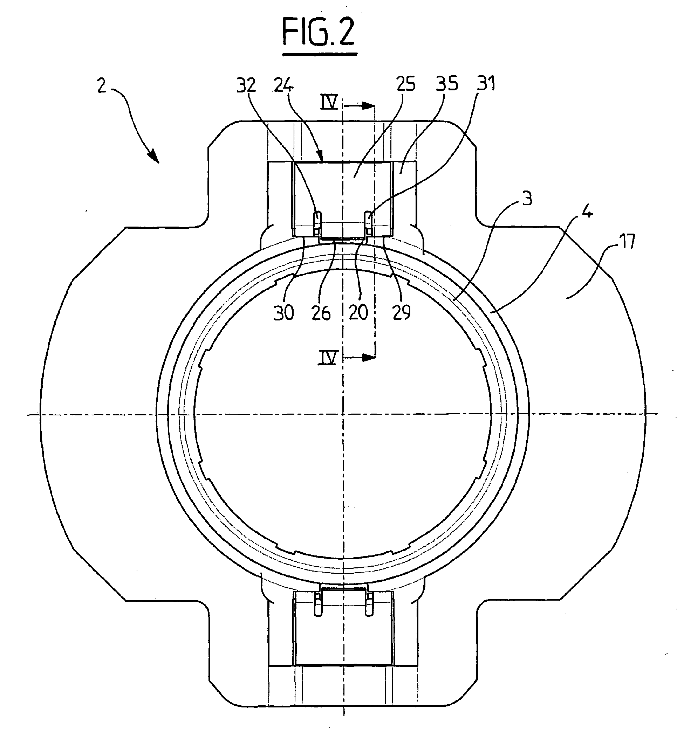

- la figure 2 est une vue de face en élévation de l'élément de manoeuvre dépourvu de roulement;

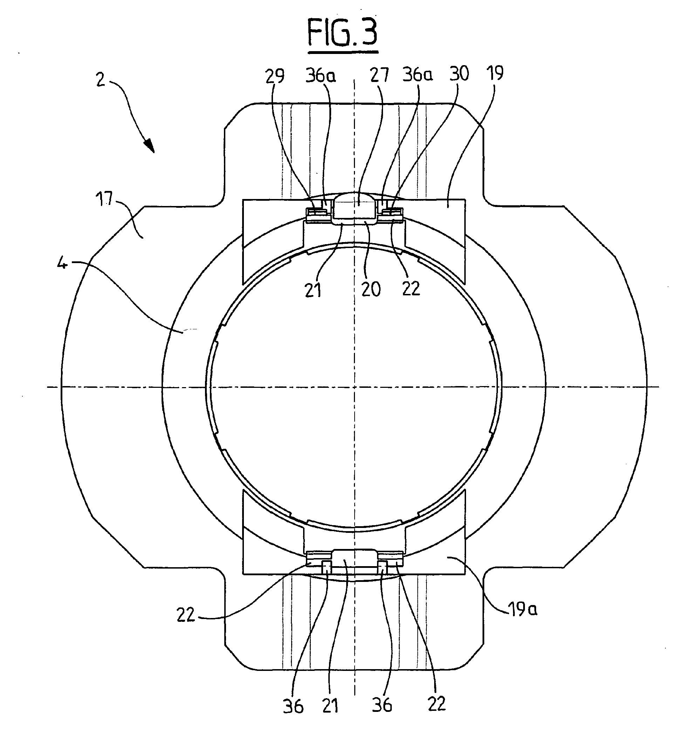

- la figure 3 est une vue arrière en élévation de l'élément de manoeuvre de la figure 2, en l'absence de fourchette
- la figure 4 est une vue en coupe selon IV-IV de la figure 2 de l'élément de manoeuvre dépourvu de roulement avec un élément de retenue en cours de montage;
- la figure 5 est une demi-vue en coupe selon IV-IV de la figure 2 de l'élément de manoeuvre dépourvu de roulement avec un élément de retenue à l'état monté; et
- la figure 6 est une vue en perspective d'un élément de retenue.

Telle qu'elle est illustrée sur les figures, la butée d'embrayage comprend un palier à roulement 1 monté sur une douille de guidage 2, laquelle comporte une portion tubulaire 3 et une collerette radiale 4. Le palier à roulement 1 comporte une bague non tournante de roulement 5 à paroi mince réalisée par emboutissage d'une tôle ou d'un tube présentant un chemin de roulement torique 6 pour une rangée de billes 7 maintenues dans une cage 8. La bague non tournante 5 comporte également une prolongation dirigée vers l'extérieur sous la forme d'une collerette radiale 9 qui vient en contact de frottement sur la surface frontale intérieure de la collerette radiale 4. Le palier à roulement 1 se complète par une bague tournante 10 également à paroi mince réalisée par emboutissage d'une tôle ou d'un tube qui présente un chemin de roulement torique 11 pour les billes 7 ainsi qu'une portion radiale 10a qui vient en contact avec la surface des doigts du diaphragme d'un dispositif d'embrayage non représenté sur la figure, la butée actionnant lesdits doigts et le dispositif d'embrayage lors du déplacement longitudinal de l'ensemble de la butée par rapport au tube-guide sur lequel coulisse la douille de guidage 2. Le palier à roulement 1 est protégé par un flasque de protection 12 fixé sur la bague tournante 10.

Un manchon en matière élastique 13, par exemple en élastomère ou en caoutchouc naturel, est disposé à l'intérieur de la bague non tournante 5 et présente une pluralité de nervures 14 parallèles à l'axe de la butée, dirigées vers l'intérieur et dont le bord libre interne entre en contact avec la surface extérieure de la portion tubulaire 3 de la douille de guidage 2, laquelle est réalisée en matière synthétique rigide, par exemple en matière synthétique additionnée de charges minérales ou analogues.

Le manchon élastique 13 présente une lèvre annulaire 15 qui assure l'étanchéité frontale du palier à roulement 1 en entrant en contact avec la bague tournante 10. Une nervure annulaire 16, disposée à l'extrémité de la portion tubulaire 3, assure la retenue axiale du palier 1 sur la douille de guidage 2 avant le montage sur le tube-guide.

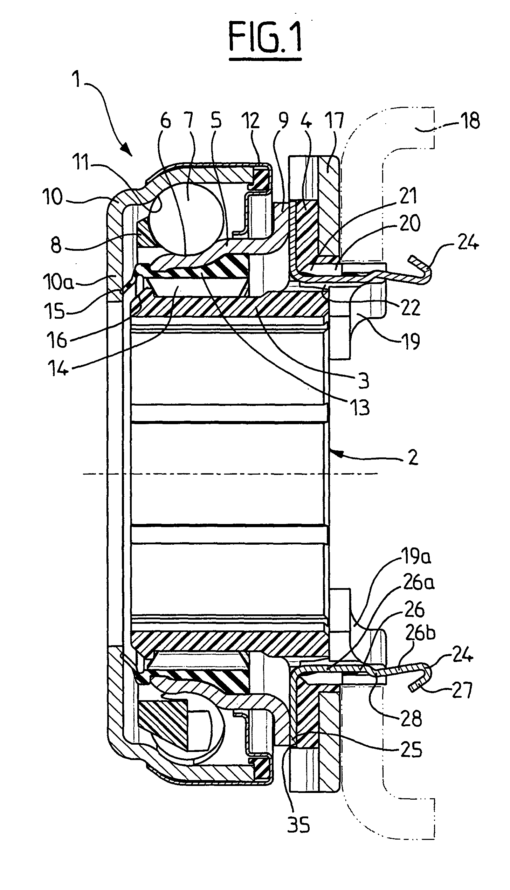

La collerette radiale 4 de la douille de guidage 2 présente un anneau métallique 17 sur lequel est surmoulée ladite collerette radiale 4. Cet anneau 17, qui a de préférence subi un traitement de durcissement superficiel, sert de surface de contact pour un organe de commande 18, également appelé fourchette, représenté en pointillés sur la figure 1 et qui exerce un effort en direction axiale pour provoquer le déplacement de la butée dans son ensemble lors d'une opération de débrayage.

La douille de guidage 2 comporte deux supports de montage référencés 19, 19a dans leur ensemble et disposés de manière diamétralement opposée, en faisant saillie en partie vers l'extérieur, c'est-à-dire à l'opposé du palier à roulement 1, comme on peut le voir sur la figure 1.

Le support de montage 19, qui est identique au support de montage 19a, présente un logement 20 qui comprend un passage traversant 21 et deux glissières 22 placées de chaque côté du passage 21 en étant ouvertes sur leur extrémité frontale extérieure, c'est-à-dire du côté de l'organe de commande 18 (figure 1).

La solidarisation axiale de l'organe de commande 18, par rapport à la douille de guidage 2, se fait au moyen de deux éléments de retenue métalliques 24 identiques qui viennent coopérer respectivement avec les supports de montage 19, 19a.

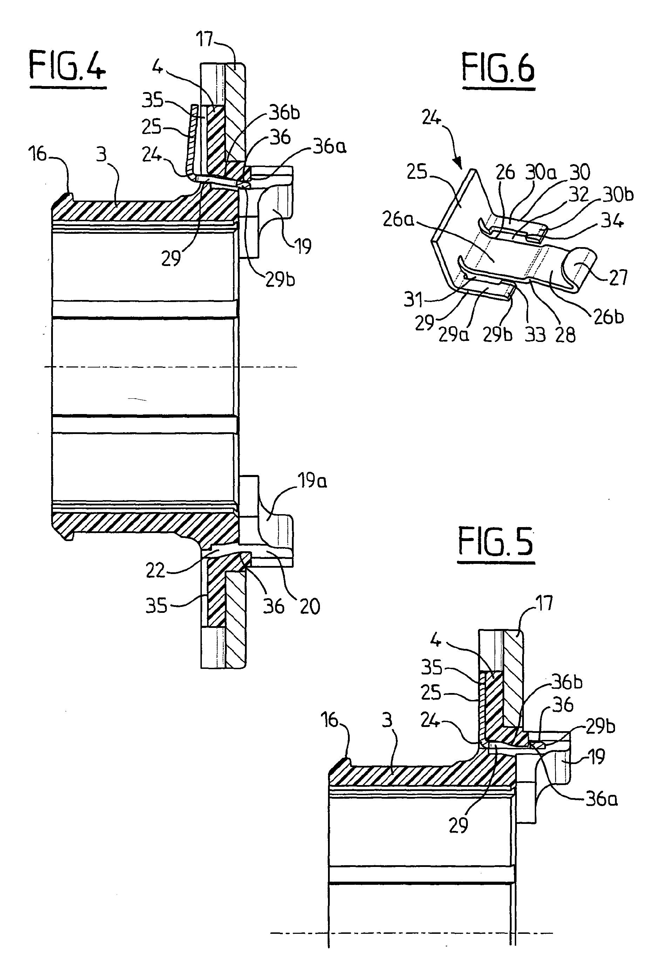

En se reportant à la figure 6, on voit que l'élément de retenue 24 présente une forme générale en L avec un talon radial 25 de forme générale rectangulaire et duquel est issue une languette centrale principale 26, de forme générale axiale, dont la largeur est nettement inférieure à celle du talon radial, par exemple inférieure à la moitié de la largeur du talon radial. La languette centrale 26 de retenue est donc sensiblement perpendiculaire au talon 25. La languette centrale 26 présente, à son extrémité libre, un crochet 27 dirigé radialement vers l'extérieur et axialement en retour vers le talon pour présenter une pente oblique, par exemple de l'ordre de 30°. En outre, la languette centrale 26 présente un léger décrochement 28 vers l'extérieur définissant une première portion de languette 26a axiale disposée entre le talon radial et le décrochement 28 et une deuxième portion 26b légèrement oblique, disposée entre le décrochement 28 et le crochet 27 et dirigée légèrement vers l'intérieur à partir du décrochement 28.

L'élément de retenue 24 se complète par deux languettes latérales auxiliaires 29 et 30 symétriques par rapport à un plan radial passant par le centre de l'élément de retenue 24, disposées d'un côté et de l'autre de la languette centrale 26. Les languettes auxiliaires 29 et 30 sont séparées de la languette centrale 26 par des découpes, respectivement 31, 32, assurant en état normal une absence de contact entre la languette centrale 26 et les languettes auxiliaires 29 et 30. Les découpes 31 et 32 se prolongent légèrement dans le talon radial 25 afin de garantir l'indépendance de chaque languette lorsque l' une d'entre elles subit un effort radial la déformant élastiquement. Le talon 25 sert donc de support commun à la languette centrale 26 et aux languettes auxiliaires 29 et 30. Les languettes auxiliaires 29 et 30 présentent un corps 29a, 30a, de faible largeur, et une extrémité libre 29b, 30b, de largeur accrue, par diminution de la largeur de la découpe 31, 32, formant ainsi un crochet 33, 34 possédant une surface de retenue sensiblement perpendiculaire à la direction générale de la languette auxiliaire.

A l'état monté, le talon 25 de l'élément de retenue 24, est disposé dans un logement 35 ménagé en creux dans la face 4a de la collerette radiale 4 recevant le contact de la collerette radiale 9 de la bague intérieure 5. La profondeur du logement 35 est légèrement inférieure ou égale à l'épaisseur du talon 25. La languette centrale 26 est disposée dans le passage traversant 21 du support de montage 19 et fait saillie axialement au-delà dudit support de montage 19 à l'opposé du palier à roulement 1, le crochet 27 étant en saillie radiale par rapport à la surface extérieure du support de montage 19 pour permettre un encliquetage avec l'organe de commande 18, voir figure 1. La languette centrale 26 dispose d'un certain jeu radial dans le passage traversant 21, permettant ainsi un déplacement radial de l'ensemble de la languette centrale 26 lors de l'encliquetage de l'organe de commande 18 sur le crochet 27. Ceci donne à la languette une bonne souplesse radiale, ce qui facilite l'opération d'attelage avec l'organe de commande et évite d'autre part les concentrations excessives de contrainte à la base de la languette.

Les languettes auxiliaires 29, 30 sont disposées au moins en partie dans les glissières 22 du support de montage 19, et sont maintenues dans le sens circonférentiel et radial par lesdites glissières 22. Un ergot radial 36 est prévu dans lesdites glissières 22 en étant formé de façon monobloc avec la douille de guidage 2 et est de forme adaptée pour coopérer avec les crochets 33 et 34 des languettes auxiliaires 29 et 30. L'ergot 36 présente un chanfrein 36b du côté du palier à roulement 1 et une surface radiale 36a de butée du côté opposé.

Ainsi, lors du montage d'un élément de retenue 24 sur la douille de guidage 2, la surface extérieure des languettes auxiliaires 29 et 30 vient glisser sur le chanfrein 36b de l'ergot 36 et se plie légèrement vers l'intérieur, voir figure 4. Après que les épaulements 33, 34 ont franchi ledit ergot 36, les languettes auxiliaires 29, 30 reprennent leur forme et leur position initiale, voir figure 5. L'élément de retenue 24 est désormais maintenu axialement sur la douille de guidage 2 par contact axial entre les crochets 33 et 34 et la surface radiale 36a frontale des ergots 36. Le second élément de retenue 24 peut être monté simultanément ou après le premier.

En d'autres termes, la mise en place d'un élément de retenue 24 est particulièrement aisée et se fait par simple poussée axiale dudit élément de retenue 24 après introduction de la languette centrale 26 dans le passage 21 et des languettes auxiliaires 29 et 30 dans les glissières 22. Le passage 21 présente des dimensions suffisantes dans le sens axial pour permettre le passage du crochet 27.

Le montage de l'organe de commande 18 se fait également par poussée axiale, entraînant la flexion des crochets 27 et des languettes centrales 26 des deux éléments de retenue de la butée de débrayage. Des faces interne 37 ou externe 38 des pièces de montage 19, 19a jouent également le rôle de surfaces de guidage latérales pour l'organe de commande 18.

Dans le mode de réalisation illustré, le crochet d'encliquetage de l'organe de commande 18 est supporté par une languette centrale unique et la fixation de l'élément de retenue sur la douille de guidage est assurée par deux languettes auxiliaires latérales. Toutefois, on peut parfaitement prévoir une disposition inverse avec une languette centrale pourvue d'épaulements sur ses deux bords latéraux pour la fixation sur la douille de guidage et un ou deux crochets d'encliquetage de l'organe de commande 18 supportés par une ou deux languettes latérales. En tout état de cause, il est avantageux que les bords extérieurs du talon 25 soient situés dans le même plan que les bords extérieurs des languettes latérales. On évite ainsi des problèmes de préhension ou des risques d'accrochage de l'élément de retenue avec d'autres pièces, et on peut fabriquer l'élément de retenue 24, de façon simple par découpe et pliage d'une bande de tôle.

Dans les différents modes de réalisation, l'invention offre une butée de débrayage particulièrement robuste et à fiabilité améliorée. Les découpes séparant les languettes de l'élément de retenue et remontant légèrement dans le talon radial assurent une indépendance des languettes particulièrement intéressante. Ainsi, la languette principale qui supporte le crochet d'encliquetage de l'organe de commande peut se plier élastiquement sur toute sa longueur axiale sans avoir d'influence significative sur les languettes de retenue avec la douille de guidage. L'opération d'encliquetage de l'organe de commande est donc particulièrement aisée. Par ailleurs, la grande longueur flexible de la languette principale permet de limiter les concentrations de contraintes dans ladite languette lors de l'encliquetage. On peut alors éviter un endommagement de l'élément de retenue lors du montage de l'organe de commande sur la douille de guidage qui est ainsi fiabilisée.

## Revendications

1. Butée de débrayage comprenant un palier à roulement (1) monté sur un élément de manoeuvre (2) muni d'une partie tubulaire (3) et d'une collerette radiale (4), sur laquelle vient prendre appui un organe de commande (18) de la butée et des moyens d'encliquetage pour solidariser axialement l'organe de commande et l'élément de manoeuvre, les moyens d'encliquetage comprenant au moins deux éléments de retenue (24) métalliques indépendants, capables d'être insérés et maintenus dans un logement prévu dans l'élément de manoeuvre (2), **caractérisée par le fait que** chaque élément de retenue (24) comprend un talon radial (25) disposé axialement entre la collerette radiale de l'élément de manoeuvre et la bague non tournante (5) du roulement de butée, et une languette axiale (26) de retenue venant se raccorder directement sur le talon et comportant à son extrémité libre des moyens de retenue avec l'organe de commande, ladite languette (26) traversant une ouverture pratiquée dans la collerette radiale de l'élément de manoeuvre.

2. Butée selon la revendication 1, **caractérisée par le fait que** l'élément de retenue (24) comprend au moins une languette axiale auxiliaire (29).

3. Butée selon la revendication 2, **caractérisée par le fait que** la languette auxiliaire (29) comprend des moyens de retenue sur l'élément de manoeuvre (2).

4. Butée selon la revendication 2 ou 3, **caractérisée par le fait que** la languette auxiliaire (29) se raccorde au talon (25) tout en étant indépendante de la languette axiale (26) de retenue.

5. Butée selon la revendication 2 ou 3 ou 4, **caractérisée par le fait que** la languette auxiliaire (29) est disposée parallèlement à la languette axiale (26) et séparée de celle-ci par une découpe (31).

6. Butée selon l'une quelconque des revendications 3 à 5, **caractérisée par le fait que** la languette auxiliaire (29) comprend une portion (29a) proche du talon, de faible largeur, et une portion (29b) distante du talon, de grande largeur, apte à coopérer avec une surface (36a) de l'élément de manoeuvre pour la retenue axiale de l'élément de retenue sur l'élément de manoeuvre.

7. Butée selon la revendication 6, **caractérisée par le fait que** la portion de grande largeur (29b) est encliquetée sur l'élément de manoeuvre (2).

8. Butée selon l'une quelconque des revendications précédentes, **caractérisée par le fait que** l'élément de manoeuvre (2) comprend une glissière (22) de guidage de l'élément de retenue (24).

9. Butée selon la revendication 8, **caractérisée par le fait qu'**une partie d'une languette auxiliaire (29) est disposée dans la glissière (22).

10. Butée selon l'une quelconque des revendications précédentes, **caractérisée par le fait que** le talon (25) de l'élément de retenue (24) est logé dans un dégagement (35) de la collerette radiale (4) de l'élément de manoeuvre (2).

11. Butée selon l'une quelconque des revendications précédentes, **caractérisée par le fait que** les moyens de retenue de la languette auxiliaire (29) comprennent un crochet.

12. Butée selon l'une quelconque des revendications précédentes, **caractérisée par le fait qu'**il comprend deux languettes auxiliaires (29, 30) disposées latéralement de chaque côté de la languette axiale (26) de retenue de l'organe de commande (18).
